# EUROPEAN PATENT SPECIFICATION

(11) **EP 1 377 907 B1**
(45) Date of publication and mention of the grant of the patent: **11.10.2006**
(21) Application number: 01963348.6
(22) Date of filing: 24.08.2001
(51) Int. Cl.: G06F 11/30

(54) **SYSTEM AND METHOD FOR CAPTURING BROWSER SESSIONS AND USER ACTIONS**
SYSTEM UND VERFAHREN ZUM ERFASSEN VON BROWSER-SITZUNGEN UND VON AKTIONEN DES BENUTZERS
SYSTEME ET PROCEDE DE CAPTURE DE SESSIONS DE NAVIGATION ET D'ACTIONS D'UTILISATEURS

(30) Priority: 24.08.2000 US 227478 P
(43) Date of publication of application: 07.01.2004
(73) Proprietor: Nice Systems Ltd., 43107 Ra'anana (IL)
(72) Inventor: HAYNER, Omri, 38880 Kfar Hogla (IL); YOSEF, Ilan, 42815 Pardes Iiah (IL); GRUSHKA, Itay, 73142 Shoham (IL)
(74) Representative: Vossius & Partner
(86) International application number: PCT/IL2001/000796
(87) International publication number: WO 2002/017165

(56) References cited:
- MACGREGOR M ET AL: "Recording user actions in a Smalltalk programming environment" TECHNOLOGY OF OBJECT-ORIENTED LANGUAGES AND SYSTEMS, 1999. TOOLS 30 PROCEEDINGS SANTA BARBARA, CA, USA 1-5 AUG. 1999, LOS ALAMITOS, CA, USA,IEEE COMPUT. SOC, US, 1 August 1999 (1999-08-01), pages 280-289, XP010348627 ISBN: 0-7695-0278-4
- SASTRY CH ET AL: "Webtour: a system to record and playback dynamic multimedia annotations on web document content" ACM MULTIMEDIA, PROCEEDINGS OF THE INTERNATIONAL CONFERENCE, NEW YORK, NY, US, October 1999 (1999-10), pages 175-178, XP002175313
- AL-QAIMARI G ET AL: "KALDI: a computer-aided usability engineering tool for supporting testing and analysis of human-computer interaction" COMPUTER-AIDED DESIGN OF USER INTERFACES II. PROCEEDINGS OF THE THIRD INTERNATIONAL CONFERENCE ON COMPUTER-AIDED DESIGN OF USER INTERFACES, PROCEEDINGS OF CADUI'99: 1999 INTERNATIONAL EUROCONFERENCE ON COMPUTER-AIDED DESIGN OF USER INTERFACES, LOUVAI, pages 337-355, XP008014033 1999, Dordrecht, Netherlands, Kluwer Academic Publishers, Netherlands ISBN: 0-7923-6078-8
- NOBUKO KISHI: 'SIMUI: GRAPHICAL USER INTERFACE EVALUATION' PROCEEDINGS OF THE ANNUAL INTERNATIONAL COMPUTER SOFTWARE AND APPLICATIONS CONFERENCE (COMPSAC). CHICAGO, SEPT. 21 - 25, 1992, LOS ALAMITOS, IEEE COMP. SOC. PRESS, US vol. CONF., 21 September 1992, pages 121 - 127
- MRKOR K.-U.: 'NACHGEHAKT WINDOWS-NACHRICHTEN FILTERN MIT HOOK-FUNTIONEN' CT MAGAZIN FUER COMPUTER TECHNIK, VERLAG HEINZ HEISE GMBH., HANNOVER, DE no. 5, 01 March 1999, pages 272 - 274

## Description

### FIELD OF THE INVENTION

The present invention relates to a system and a method for capturing user actions, browser sessions, and in particular, for such a system and method in which user input device activity and user interface responses are captured.

### BACKGROUND OF THE INVENTION

The Internet, as well as local or otherwise restricted networks such as intranets, are increasingly being used to provide interactive experiences for computer users. For example, rather than providing merely static Web pages to such users, interactive experiences such as "chat" or real-time text messaging facilities, video-conferencing and/or audio-conferencing functions and other interactions with the user, are being provided through Web sites or Web applications. These increasingly sophisticated functions enable the user to interact with an operator at the Web site and/or other users in a realistic manner.

The desire to decrease costs of technical and/or other types of customer support, as well as to increase the availability of these services, has led to the sharp growth of Trade Floor and Call Center activities through such Web sites/applications and/or other types of network functions. However, these human agents must be monitored with regard to their interactions with the users, in order to provide adequate QA (Quality Assurance) for these agents and services.

This change toward supplying customer support services through Web sites on the Internet and/or other types of networks dictates the need for quality assurance technology and tools, which enable Web site operators and customer support (contact) center managers to understand the needs of users as customers or clients, and to perform quality assurance on their Web sites and network services.

On the other hand, the users of such Web sites are also performing an increased number of actions on the Web such as buying, selling, and entering information into different forms. Currently, the only mechanism for archiving these actions is to print hard copies of each Web page onto paper, or save individual Web pages without regard to the sequence of actions which produced these Web pages. Furthermore, for such "real-time" communications as chat functions, currently available Web browser technology does not provide any suitable mechanism for saving data related to the actual chat. Thus, neither the users of such Web sites (end-users) nor the operators of these sites currently have useful tools for collecting information about interactive sessions between the user and the Web site.

The document of Sastry, Ch. et al: "Webtour: a system to record and playback dynamic multimedia annotations on web document content", ACM MULTIMEDIA, PROCEEDINGS OF THE INTERNATIONAL CONFERENCE, NEW YORK, October 1999, pages 175-178, XP002175313, relates to a system to record, playback, store, search, and distribute personalized dynamic multimedia annotations on web documents in the form of guided web tours.

The document of Al-Qaimari, G. et al: "KALDI: a computer-aided usability engineering tool for supporting testing and analysis of human-computer interaction", PROCEEDINGS OF CADUI'99: INTERNATIONAL EUROCONFERENCE ON COMPUTER-AIDED DESIGN OF USER INTERFACES; LOUVAI, pages 337-355, XP008014033, relates to a tool called KALDI, which is tightly integrated with the Java graphical toolkit and uses only software techniques to record precise user actions as well as to capture a video-like recording of the user interface being tested.

The document of Kishi, N. : "SimUI: Graphical User Interface Evaluation", IEEE COMP. SOC. PRESS, 21. September 1992, pages 121-127 relates to a set of tools for evaluating graphical user interface designs during software development. These tools record mouse and keyboard operations by users and compare them to detect potential usability problems.

The document of Mrkor, K.-U.: "Nachgehakt, Windows-Nachrichten filtern mit Hook-Funktionen", CT MAGAZIN, 1. March 1999, vol. no. 5, pages 272-274, 276, 278, 280-281 relates to methods for filtering windows-messages with "hook-functions".

### SUMMARY OF THE INVENTION

The background art does not teach or suggest a solution to the problem of collecting information about an interactive session over a network. The background art also does not teach or suggest a solution to the problem of archiving Web site sessions. In addition, the background art does not teach or suggest a solution to the problem of quality assurance/quality control for interactions between a user and an agent through a Web site and/or other type of network interactions.

The present invention overcomes these problems of the background art by providing a system and method for the collection of data with regard to the actions of the user during an interactive session over a network. The present invention features a client which is operated by the computational device of the user, and which collects information both about user input device actions and the reactions which are displayed through the user interface. The user interface is preferably a GUI (graphical user interface), but optionally and more preferably is a Web browser interface. Alternatively, the user interface is any type of interface which becomes altered upon receiving user input through a user input device.

The client preferably collects these different types of data and then sends the data to be stored in a central database. Optionally and preferably, the data is organized according to a particular structure before being stored in the database. Also optionally, such organization of the data is performed by the client, such that the data is organized in a message which is sent to the storage computational device operating the database. Alternatively, the data is sent to the storage computational device before it is organized into the final structure, such that the storage computational device and/or a third entity performs the organization into the storage structure.

According to the embodiment of the present invention, the client is outside an organizational network, such that the collected data must pass through a firewall. Preferably, the collected data is sent to a proxy server before entering the organizational network. More preferably, such a proxy server is located in the DMZ (demilitarized zone) between an outer and an inner firewall, such that the client cannot directly access a computational device inside the organizational network. Instead, the proxy server at least partially processes the collected data, which may then optionally be retrieved by the storage computational device from within the inner firewall for storage in the database.

The present invention is suitable for interacting with substantially any type of user input device. Examples of such user input devices include, but are not limited to, a pointing device such a mouse for example; a keyboard and/or keypad; handwriting or stylus-based input; or any type of mechanism which can be at least partially controlled by the user.

Hereinafter, the term "keypad" refers to any keyboard in which at least one key features a plurality of alphanumeric characters and/or symbol portions, which may also be termed a "reduced keypad". One non-limiting example of such a keypad is typically found on cellular telephones, for entering numeric and/or alphanumeric characters, and/or symbol portions for languages with an ideographic writing system.

Examples of suitable applications for implementation with the present invention include, but are not limited to, the analysis of the actions of users on a Web site for Web site operators, for example for Quality Assurance; and archiving interactive sessions with a Web site by the users for their own purposes.

Hereinafter, the term "computational device" refers to any type of computer hardware system and/or to any type of software operating system, or cellular telephones or any type of hand-held device such as a PDA (personal data assistant), as well as to any type of device having a data processor and/or any type of microprocessor, or any type of device which is capable of performing any function of a computer.

For the present invention, a software application or program could be written in substantially any suitable programming language, which could easily be selected by one of ordinary skill in the art. The programming language chosen should be compatible with the computational device according to which the software application is executed. Examples of suitable programming languages include, but are not limited to, Delphi, C#, C, C++ and Java.

Hereinafter, the term "Web browser" refers to any software program which can display text, graphics, or both, from Web pages on World Wide Web sites. Hereinafter, the term "Web page" refers to any document written in a mark-up language including, but not limited to, HTML (hypertext mark-up language) or VRML (virtual reality modeling language), dynamic HTML, XML (extended mark-up language) or related computer languages thereof, as well as to any collection of such documents reachable through one specific Internet address or at one specific World Wide Web site, or any document obtainable through a particular URL (Uniform Resource Locator). Hereinafter, the term "Web site" refers to at least one Web page, and preferably a plurality of Web pages, virtually connected to form a coherent group. Hereinafter, the term "Web server" refers to a computer or other electronic device which is capable of serving files and data according to the HTTP protocol to a Web browser.

Hereinafter, the term "applet" refers to a self-contained software module written in an applet language such as Java or constructed as an ActiveX^{™} control. Hereinafter, the term "client" refers to any type of software program and/or code and/or other instructions, which are operated and/or performed by the computational device of the user.

Hereinafter, the term "network" refers to a connection between any two or more computers which permits the transmission of data.

Hereinafter, the phrase "display a Web page" includes all actions necessary to render at least a portion of the information on the Web page available to the computer user. As such, the phrase includes, but is not limited to, the static visual display of static graphical information, the audible production of audio information, the animated visual display of animation and the visual display of video stream data.

Hereinafter, the term "user" refers to the person who operates the Web browser or other GUI interface and interacts with the system of the present invention by operating a computational device.

### BRIEF DESCRIPTION OF THE DRAWINGS

The invention is herein described, by way of example only, with reference to the accompanying drawings, wherein:
FIG. 1 is a schematic block diagram of an exemplary system according to the present invention;
FIGS. 2A and 2B are flowcharts of exemplary methods for capturing data according to the present invention;
FIG. 3 is a flowchart of an exemplary method for playing back data according to the present invention; and
FIG. 4 is a schematic block diagram of a second exemplary system according to the present invention.

### DESCRIPTION OF THE PREFERRED EMBODIMENTS

The present invention is of a system and method for the collection of data with regard to the actions of the user during an interactive session over a network. The present invention features a client which is operated by the computational device of the user, and which collects information both about user input device actions and the reactions which are displayed through the user interface. The user interface is preferably a GUI (graphical user interface), but optionally and more preferably is a Web browser interface. Alternatively, the user interface is any type of interface which becomes altered upon receiving user input through a user input device.

The client preferably collects these different types of data and then more preferably sends the data to be stored in a central database. Optionally and preferably, the data is organized according to a particular structure before being stored in the database. Also optionally, such organization of the data is performed by the client, such that the data is organized in a message which is sent to the storage computational device operating the database. Alternatively, the data is sent to the storage computational device before it is organized into the final structure, such that the storage computational device and/or a third entity performs the organization into the storage structure.

According to the embodiment of the present invention, the client is outside an organizational network,(Intranet or VPN (virtual private network)), such that the collected data must pass through at least one firewall. Preferably, the collected data is sent to a proxy server before entering the organizational network. More preferably, such a proxy server is located in the DMZ (demilitarized zone) between an outer and an inner side of the DMZ , such that the client cannot directly access a computational device inside the organizational network. Instead, the proxy server at least partially processes the collected data, which may then optionally be retrieved by the storage computational device from within the inner firewall for storage in the database.

The present invention is suitable for interacting with substantially any type of user input device. Examples of such user input devices include, but are not limited to, a pointing device such a mouse for example; a keyboard and/or keypad; handwriting or stylus-based input; or any type of mechanism which can be at least partially controlled by the user.

In addition, the present invention is useful for the collection of data about substantially any type of user interface function. Examples of such user interface functions include but are not limited to any type of GUI window activity; activity with GUI gadgets such as buttons, sliders or any function provided through a GUI window; the display of any image and/or text, including but not limited to Web pages and/or any component thereof; information provided through an audible interface such as a synthesized voice; information provided through the display of video data; and any type of information which is provided through, or otherwise detectable by, the operating system of the user computational device.

The principles and operation of the method according to the present invention may be better understood with reference to the drawings and the accompanying description. It should be noted that the present invention is described with regard to Web browsers for the purposes of clarity only and without any intention of being limiting.

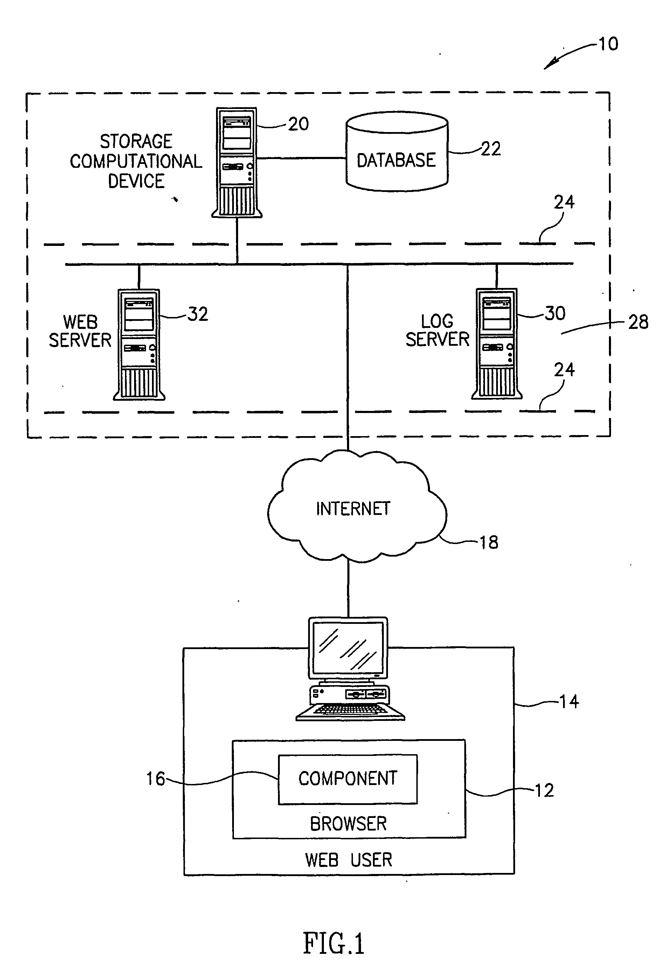

Referring now to the drawings, Figure 1 shows an illustrative system **10** for collecting data about user actions. A user interacts with a Web browser **12** being operated by a user computational device **14.** These interactions may optionally include, but are not limited to, user input device actions, displaying Web pages and any type of GUI (graphical user interface) activities. As such, these interactions preferably include both user actions, such as entering information through a keyboard and/or "clicking on" or otherwise selecting a GUI gadget through a pointing device; and reactions to these user actions, such as displaying a Web page for example. These interactions are preferably collected by a client **16** which is operated by user computational device **14.**

Client **16** is optionally implemented as an applet, such as a Java applet or ActiveX control (Web browser **12** forms the container); or alternatively as a software application. The ActiveX control and the software application may both optionally use the Web browser COM interface or perform hooking on the OS, in order to capture user action and sniffing on the network layer in order to capture Web browser sessions.

User computational device **14** is connected to a network **18.** Network **18** may be the Internet, for example, as shown with regard to the embodiment of system **10** in Figure 1. User computational device **14** is able to communicate, directly or indirectly, with a storage computational device **20** for transmitting the collected data, collected by client **16.** Storage computational device **20** is preferably able to operate a database **22** for storing the collected data.

According to an exemplary but preferred embodiment of the present invention, storage computational device **20** organizes the data according to a particular structure before the data is stored in database **22.** Alternatively, such organization may optionally be performed by client **16** before transmission to storage computational device **20.** In any case, such organization preferably includes decomposing the captured data into a plurality of components. Most preferably, such organization includes entering specific types of data into particular fields, such that each type of event has related data for entry to these fields.

Client **16** is optionally and more preferably able to detect substantially any type of user input device activity including, but not limited to, pointing device activities such as "clicking on" or otherwise selecting a GUI gadget or any other portion of the GUI, for example with a mouse. Other types of activities for which data may be collected include detecting keystrokes from a keyboard and/or keypad, as well as information entered as handwriting or stylus-based input. Voice input may also optionally be collected, as well as input for any type of mechanism which can be at least partially controlled by the user.
In addition, the present invention is useful for the collection of data about substantially any type of user interface function. Examples of such user interface functions include but are not limited to any type of GUI window activity; activity with GUI gadgets such as buttons, sliders or any function provided through a GUI window; the display of any image and/or text, including but not limited to Web pages and/or any component thereof; information provided through an audible audio interface such as a synthesized voice; information provided through the display of video data; and any type of information which is provided through, or otherwise detectable by, the operating system of user computational device **14.** Examples of GUI window activities include but are not limited to scrolling through the window, and data about the active window and its properties such as size, location and so forth.

Client **16** is preferably able to filter the collected data, more preferably in order to separate the collected data into components for transmission to storage computational device **20.** In addition, client **16** preferably also collects and transmits timing information to storage computational device **20,** such as a timestamp for example, in order for storage computational device **20** to be able to synchronize the different types of events and associated data.

More preferably, storage computational device **20** captures each action of the user and each reaction of the user interface as a separate event, while the associated data is stored as parameters for that event. Therefore, storage computational device **20** most preferably does not capture a screenshot as a bitmap or other type of image. Instead, the meta-data is preferably captured and organized. More preferably, only the meta-data is captured. For example, a Web page could optionally be captured as HTML code and one or more images, such that the Web page could be reconstructed, but is more preferably not captured as a single complete image.

More preferably, storage computational device **20** is able to organize and display the stored data in order to be able to reconstruct the interactive session with the user. Most preferably, storage computational device **20** is able to provide this data organized such that the interactive session is replayed. Optionally and most preferably, the interactive session can be replayed to any Web browser, as the reconstructed data is most preferably provided in a format which is suitable for being replayed by any Web browser. For this preferred embodiment, the data is stored as a series of events, for which the data stored in the field(s) forms the parameters for each event, such that the Web browser can optionally be used to "read" the data event by event, for replaying the interactive session.

A separate display client (not shown) may optionally be provided for displaying the events and hence replaying the session. Alternatively, client **16** may also optionally be used to replay the session. Such a display client could optionally be implemented as an ActiveX control, which preferably connects to storage computational device **20** and pulls data from it. Such an ActiveX control would optionally separate the HTML data from the events, push the HTML pages to a Web browser component of the display client, and then simulate the user events synchronously with the HTML pages. Playback of Web-based sessions could optionally be done by using a user name and password to connect to storage computational device **20.**

According to the embodiment of the present invention, the user input device actions and the user interface reactions are captured through the operating system of user computational device **14.** An example of a method for capturing such data is given below with regard to the Windows^{™} operating system (Microsoft Inc, USA), it being understood that this is being given as an illustrative example only and without any intention of being limiting. The API calls and WIN32 functions that are being used are native operating system functions that are supported by all Windows^{™} operating system environments.

For each running Microsoft Internet Explorer instance as an example of Web browser **12,** a Hook function is set in order to capture the keyboard strokes and mouse movements and clicks. The captured data is placed into a binary file in a structure that contains the details about the activity and the time stamp of the operation. Such capture actions preferably occur only after the Web page is loaded completely by Web browser **12.**

The Hook function for keyboards is optionally and preferably implemented by calling the Win32 function "SetWindowsHookEx" with the WH_GETMESSAGE parameter set. The Hook function for the mouse is optionally and preferably implemented by calling the Win32 function "SetWindowsHookEx" with the WH_MOUSE parameter set.

The keyboard callback procedure preferably receives all browser keyboard actions (and other window messages), which then waits for the next window message, which is WM_SYSKEYDOWN; WM_KEYDOWN; WM_SYSKEYUP; or WM_KEYUP. Each such message contains data about which key was pressed and which window received the character. By detecting and capturing those messages, the character is known, as well as where the user typed. The differences between SYSKEY and KEY is that SYSKEY commands contain information about system keys like CTRL, SHIFT and so forth..

For the mouse callback procedure, preferably all browser mouse actions are sent to this callback which waits for the next window messages, which is preferably one of the following messages: WM_MOUSEMOVE; WM_LBUTTONDOWN; WM_LBUTTONUP; WM_MOUSEWHEEL; WM_RBUTTONDOWN; WM_RBUTTONUP; WM_MBUTTONDOWN; WM_MBUTTONUP; or WM_LBUTTONDBLCLK.

The captured data is then preferably stored according to a particular organizational structure as previously described. For example, the mouse event structure preferably includes the following fields: _timeb now; DWORD dwFlags;DWORD dx; DWORD dy; DWORD dwData; and LPARAM dwExtraInfo. The keyboard event structure preferably includes the following fields: timeb now; BYTE bVk; BYTE bScan; DWORD dwFlags; and LPARAM dwExtraInfo. These are standared Win32 structures that hold data about the mouse event. This structure is described in Microsoft Win32 documentation.

For the purpose of replaying the session and/or otherwise playing back the stored data, preferably for each Internet explorer running instance (as an example of Web browser **12**), after the Web page is loaded, preferably a hook file related to this Web page may optionally be played. The replayed data is preferably obtained from the file as recorded by the capture component and containing the structure described above. The time stamps that were entered at the recording stage are preferably used to synchronize the playing operation. Each stored event holds information about the corresponding action which occurred. For example, a mouse event describes the location of the mouse on the screen and whether an action was performed, such as whether the mouse left button was pressed. If a time stamp is placed on each event at the capturing stage, these events can be simulated (played back) according to the delta of time which passed between one event to the other, as determined according to the timestamps.

In order to control the mouse and keyboard functions of the computational device being used to play back or display the stored data, the following API functions are preferably used: mouse_event -operates the mouse as if an end user is activating it; keybd_event -operates the keyboard as if an end user is activating it.

Turning back to Figure 1, according to the embodiment of the present invention, storage computational device **20** and database **22** are preferably separated from user computational device **14** and related functions. More preferably, such a separation is performed with at least one firewall **24.** According to the embodiment shown, two such firewalls **24** are used, a first outer firewall **24** to separate between an organizational entity **26** and network **18;** and a second inner firewall **24** to separate a DMZ **28** from the remainder of organizational entity **26.** DMZ **28** preferably contains a log server **30** for receiving the data from user computational device **14** and for optionally organizing such data, and a Web server **32.** In this preferred implementation, storage computational device **20** would pull the received data from log server **30.**

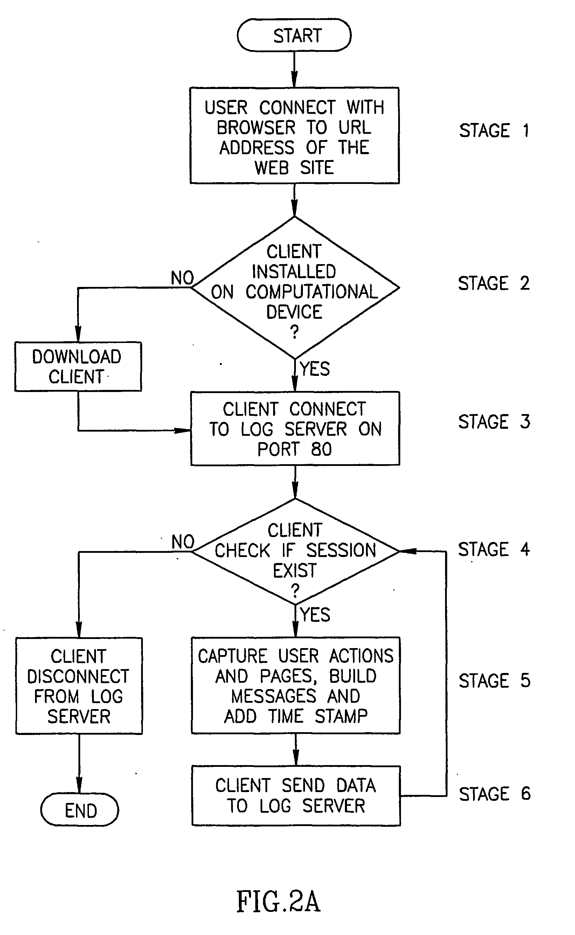

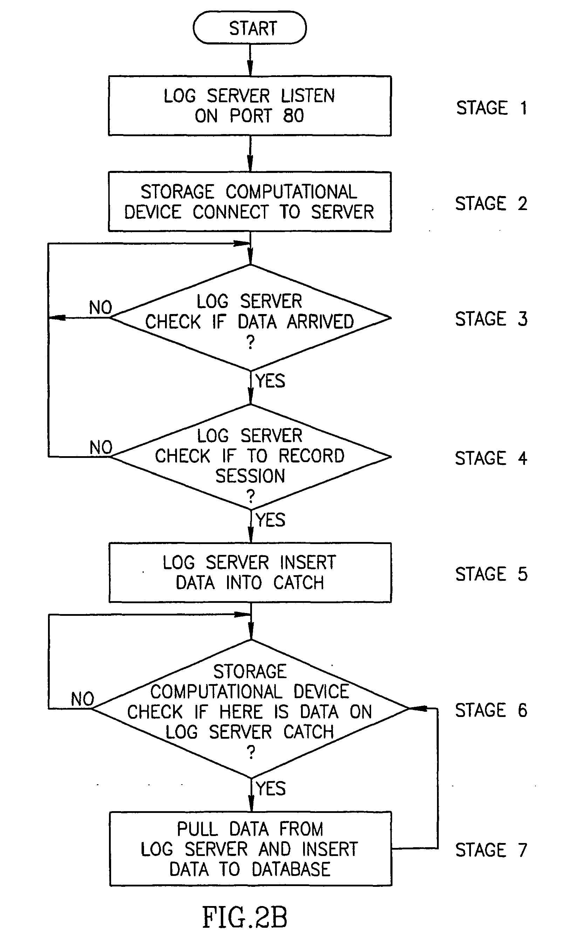

Figure 2 shows a flowchart of an exemplary method for collecting data according to the present invention. This method is divided into two parts for clarity of explanation only: Figure 2A shows the capturing part of the method, while Figure 2B shows the archiving part of the method.

As shown in Figure 2A, preferably in stage 1, the user connects with the Web browser to a requested Web site according to the URL of the Web site. The Web site is optionally and more preferably served by the Web server of the organizational entity of Figure 1, although this is not necessary. In stage 2, preferably a server of some type, whether operated through the Web server or otherwise provided, determines whether the client of Figure 1 is installed on the user computational device. If not, then the client is downloaded. Otherwise, in stage 3, the client preferably connects to a log server on port 80. The log server may optionally be the storage computational device of Figure 1.

In stage 4, the client determines whether a session has been established between the user computational device and the Web server which is being monitored. If such a session has not been established and/or is disrupted, then preferably the client disconnects from the log server. Otherwise, in stage 5, the user actions and GUI reactions (such as displayed Web pages for example) are preferably captured; messages are built; and a time stamp is added. In stage 6, the captured data is sent by the client the log server. Stages 5 and 6 are optionally repeated at least once, and more preferably are repeated until the session is ended.

Figure 2B shows an exemplary archiving method according to the present invention. The log server listens on port 80 for incoming data in stage 1, preferably in the form of messages as previously described. Also, as previously described, the log server may optionally be the storage computational device of Figure 1. However, if the log server is different from the storage computational device of Figure 1, in stage 2, more preferably the log server connects to the storage computational device.

In stage 3, the log server determines whether new data has arrived. If new data has not arrived, the log server preferably waits. Otherwise, the log server preferably determines whether a request to start recording a session has been received in stage 4. If such a request has been received, then in stage 5, the log server preferably inserts data into catch, such that the log server keeps the received data in a temporary storage buffer, or "catch".

In stage 6, the storage computational device preferably determines whether data can be pulled from the log server. If such data is available in the catch of the log server, then the storage computational device preferably retrieves and stores the data in the database, in stage 7. This process is optionally repeated, preferably as often as necessary to retrieve any received data.

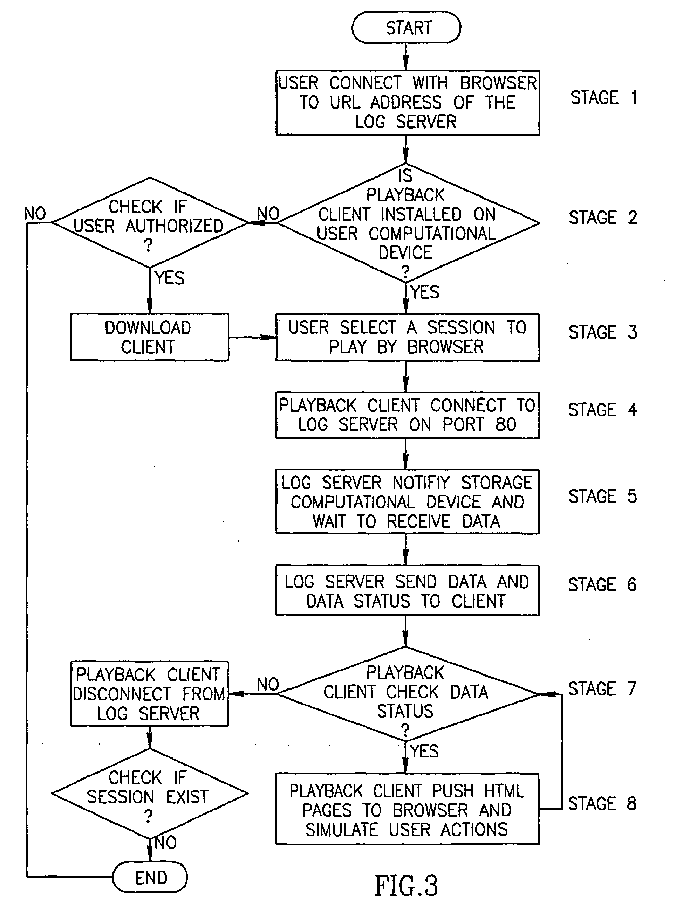

Figure 3 shows an exemplary method for playing back data according to the present invention. As shown, in stage 1, the user preferably uses a Web browser to connect to the address (URL) of the log server, which is operating in this example as the playback server. In stage 2, the log server determines whether the playback client is installed on the user computational device, for playing back the captured data. If not, and if the user is authorized, then the playback client is preferably downloaded.

In stage 3, once the playback client is available, then the user selects a Web-based session to play back. In stage 4, the playback client connects to the log server, for example through port 80. In stage 5, the log server optionally notifies the storage computational device, if the two servers are separate components, and then waits to receive data.

In any case, the log server sends the data to the playback client in stage 6. In stage 7, the playback client preferably checks the data status. If there is no data, then the playback client preferably disconnects from the log server, and more preferably also determines whether a session is still present. Otherwise, in stage 8, the playback client preferably pushes Web pages to the Web browser of the user computational device and replays the data for simulating the previously performed actions of the user for replaying the session.

The methods of Figures 2 and 3 may optionally be performed in the presence of absence of a DMZ and/or one or more firewalls, with similar functioning, apart from the requirement for two separate servers for receiving and storing the data in the case of an implementation with the DMZ as shown in Figure 1.

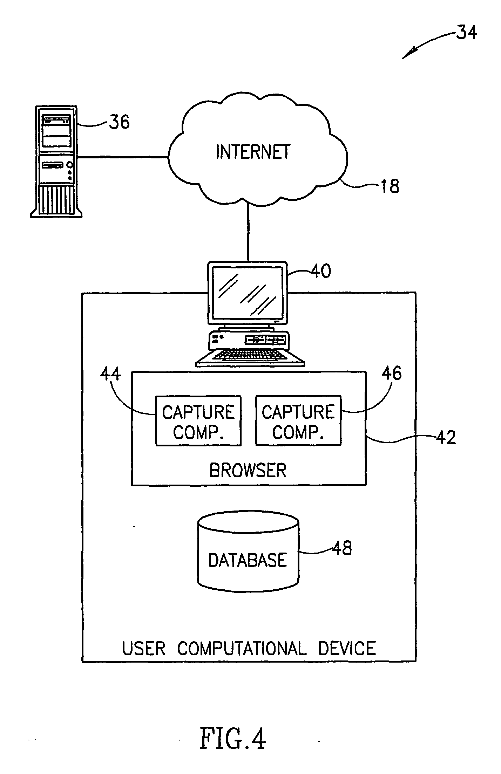

According to examples of the present invention, both the capture and storage functions may optionally be performed by the same computational device. For this implementation, the capture client, the storage server and the play back functions may all optionally be implemented as separate processes which are operated by the same computational device. This implementation is shown for example with regard to Figure 4, a system **34** features a Web server **36** for serving Web pages through the Internet **38** or other network. These Web pages are downloaded to a user computational device **40,** which features a Web browser **42** for displaying these Web pages.

User computational device **40** preferably also features a capture component **44** for capturing the previously described user actions and user interface reactions; and a playback component **46** for playing back the captured data, also as previously described. Rather than sending the captured data to a remote server, capture component **44** preferably stores the captured data in a database **48.** User computational device **40** can therefore preferably be used to both capture and playback the data.

Optionally and more preferably, Web browser **42** preferably contains both capture component **44** and playback component **46,** to enable any client to playback the relevant sessions recorded by that client.

While the invention has been described with respect to a limited number of embodiments, it will be appreciated that many variations, modifications and other applications of the invention may be made.

## Claims

1. A method for collecting data about an interactive user session, over a network comprising:
determining the establishment of said interactive user session;
detecting and capturing by a user computational device via native operating system functions of said user computational device both a user input device action of a given user and a user interface reaction of said interactive user session;
separating both said user input device action and said user interface reaction into at least one event and associated data, said associated data forming parameters for said at least one event; and
sending said at least one event and associated data, through an outer firewall of a DMZ (demilitarized zone) comprising an inner and said outer firewall, for storage in association at a user accessible intermediate server within said DMZ, such that said data is retrievable from within said inner firewall by a storage computational device, said association comprising an organization of said at least one event and associated data such as to permit a remote reconstruction of said interactive user session said reconstruction comprising both said user input device action and said user interface reaction, said reconstruction being made from said at least one event and associated data.

2. The method of claim 1, wherein there is the additional step of replaying at least a portion of the interactive user session by simulation from said at least one event and associated data.

3. The method of claim 1 or 2 wherein said user input device is selected from the group consisting of a pointing device, a keyboard, and a stylus input.

4. The method of any of claims 1-3, wherein said user interface reaction is performed through a GUI (graphical user interface).

5. The method of claim 4, wherein said GUI features a window, and said user interface reaction includes a window activity.

6. The method of claim 5, wherein said GUI is provided through a Web browser, and said user interface reaction includes displaying a Web page.

7. The method of claim 6, wherein data for said Web page is separated into at least mark-up language code for reconstructing said Web page.

8. The method of any of claims 1-7, wherein said at least one event and associated data is filtered.

9. The method of any of claims 2-8, wherein said replaying is performed according to a timestamp of each event.

10. The method of any of claims 1-9, wherein said at least one user input device action and said user interface reaction is part of an interaction between said user and a human agent, thereby to enable remote assessment of quality assurance and/or quality control in relation to said interaction.

11. A system for collecting data about an interactive user session over a network, comprising:
(a) a user computational device (14); and
(b) a client (16) operated by said user computational device, configured to determine the establishment of said interactive user session and to detect and capture both a user input device action and a user interface reaction;
(c) a remotely located server (32) for performing the interactive user session with said user computational device; and
(d) a storage computational device (20) associated with said remotely located server, for separating both said user input device action and said user interface reaction into at least one event and associated data in association, said associated data being parameter data of said at least one event, said association comprising an organization of said-event and associated data such that both said user input device action and said user interface reaction are remotely reconstructable from said at least one event and associated data; and
**characterized in that** said client is configured to perform said detecting and capturing via the native operating system functions of the user computational device, and further **characterized by**:
(e) a DMZ (demilitarized zone) (28) located between an inner and an outer firewall, which separates said storage computational device from said user computational device; and
(f) an intermediate-server placed in said DMZ, said intermediate server operative to receive from said client said detected user action and a user interface reaction and being configured to permit retrieval of said detected user action and user interface reaction from within said inner firewall by said storage computational device.

12. The system of claim 11, further comprising:
(f) a log server (32) for organizing said user action and said user interface reaction.

13. The system of claims 11 or 12, wherein said server is located in said DMZ.

14. The system of claims 12 or 13, wherein said log server is located in said DMZ.

15. The system of claim 11, further comprising:
(g) a storage process for organizing said plurality of data components for storage on said storage computational device; and
(h) a database operated by said storage computational device for receiving said plurality of data components for storage.

## Patentansprüche

1. Verfahren zum Sammeln von Daten über eine interaktive Benutzersitzung über ein Netzwerk, das aufweist:
Bestimmen der Einrichtung der interaktiven Benutzersitzung;
Erkennen und Erfassen sowohl einer Benutzereingabevorrichtungsaktion eines gegebenen Benutzers als auch einer Benutzerschnittstellenreaktion der interaktiven Benutzersitzung durch eine Benutzerrechenvorrichtung über spezifische Betriebssystemfunktionen der Benutzerrechenvorrichtung;
Tennen der Benutzereingabevorrichtungsaktion und der Benutzerschnittstellenreaktion in mindestens ein Ereignis und zugehörige Daten, wobei die zugehörigen Daten Parameter für das mindestens eine Ereignis bilden; und
Senden des mindestens einen Ereignisses und zugehöriger Daten durch eine äußere Firewall einer DMZ (demilitarisierten Zone), die eine innere und die äußere Firewall aufweist, zum Speichern an einem benutzerzugänglichen Zwischenserver in der DMZ im Zusammenhang, so daß diese Daten durch eine Speicherrechenvorrichtung aus dem Innenraum der inneren Firewall abrufbar sind, wobei der Zusammenhang eine Ordnung des mindestens einen Ereignisses und zugehöriger Daten aufweist, um eine Fernrekonstruktion der interaktiven Benutzersitzung zu ermöglichen, die sowohl die Benutzereingabevorrichtungsaktion als auch die Benutzerschnittstellenreaktion aufweist, wobei die Rekonstruktion aus dem mindestens einen Ereignis und zugehörigen Daten vorgenommen wird.

2. Verfahren nach Anspruch 1, wobei es den zusätzlichen Schritt der Wiedergabe von zumindest einem Teil der interaktiven Benutzersitzung durch die Simulation des mindestens einen Ereignisses und zugehöriger Daten gibt.

3. Verfahren nach Anspruch 1 oder 2, wobei die Benutzereingabevorrichtung aus der Gruppe ausgewählt wird, die aus einer Zeigervorrichtung, einer Tastatur und einer Stifteingabe besteht.

4. Verfahren nach einem der Ansprüche 1 - 3, wobei die Benutzerschnittstellenreaktion durch eine GUI (graphische Benutzerschnittstelle) durchgeführt wird.

5. Verfahren nach Anspruch 4, wobei das GUI ein Fenster aufweist und die Benutzerschnittstellenreaktion eine Fensteraktivität umfaßt.

6. Verfahren nach Anspruch 5, wobei das GUI durch einen Web-Browser bereitgestellt wird und die Benutzerschnittstellenreaktion die Anzeige einer Web-Seite umfaßt.

7. Verfahren nach Anspruch 6, wobei Daten für die Web-Seite zumindest in Auszeichnungssprachcode getrennt werden, um die Web-Seite wiederherzustellen.

8. Verfahren nach einem der Ansprüche 1 - 7, wobei das mindestens eine Ereignis und zugehörige Daten gefiltert werden.

9. Verfahren nach einem der Ansprüche 2 - 8, wobei die Wiedergabe entspechend einem Zeitstempel jedes Ereignisses durchgeführt wird.

10. Verfahren nach einem der Ansprüche 1 - 9, wobei die mindestens eine Benutzereingabevorrichtungsaktion und die Benutzerschnittstellenreaktion Teil einer Interaktion zwischen dem Benutzer und einem menschlichen Bearbeiter sind, um **dadurch** die Ferneinschätzung der Qualitätssicherung und/oder Qualitätskontrolle in Bezug auf die Interaktion zu ermöglichen.

11. System zum Sammeln von Daten über eine interaktive Benutzersitzung über ein Netzwerk, das aufweist:
(a) eine Benutzerrechenvorrichtung (14); und
(b) einen Client (16), der von der Benutzerrechenvorrichtung bedient wird, der derart aufgebaut ist, daß er die Einrichtung der interaktiven Benutzersitzung bestimmt und sowohl eine Benutzereingabevorrichtungsaktion als auch eine Benutzerschnittstellenreaktion erkennt und erfaßt;
(c) einen fern angeordneten Server (32) zum Ausführen der interaktiven Benutzersitzung mit der Benutzerrechenvorrichtung; und
(d) eine mit dem fern angeordneten Server verbundene Speicherrechenvorrichtung (20) zum Tennen der Benutzereingabevorrichtungsaktion und der Benutzerschnittstellenreaktion in mindestens ein Ereignis und im Zusammenhang zugehörige Daten, wobei die zugehörigen Daten Parameterdaten des mindestens einen Ereignisses sind, wobei der Zusammenhang eine Ordnung des Ereignisses und zugehöriger Daten aufweist, so daß sowohl die Benutzereingabevorrichtungsaktion als auch die Benutzerschnittstellenreaktion aus dem mindestens einen Ereignis und zugehörigen Daten von fern rekonstruierbar sind; und
**dadurch gekennzeichnet, daß** der Client derart aufgebaut ist, daß er das Erkennen und Erfassen über die spezifischen Betriebssystemfunktionen der Benutzerrechenvorrichtung durchführt; und ferner **gekennzeichnet durch**:
(e) eine zwischen einer inneren und einer äußeren Firewall angeordnete DMZ (demilitarisierte Zone) (28), welche die Speicherrechenvorrichtung von der Benutzerrechenvorrichtung trennt; und
(f) einen in der DMZ angeordneten Zwischenserver, wobei der Zwischenserver funktionsfähig ist, um die erkannte Benutzeraktion und eine Benutzerschnittstellenreaktion von dem Client zu empfangen, und derart konfiguriert ist, daß er das Abrufen der erkannten Benutzeraktion und der Benutzerschnittstellenreaktion aus dem Innenraum der inneren Firewall **durch** die Speicherrechenvorrichtung ermöglicht.

12. System nach Anspruch 11, das ferner aufweist:
(f) einen Protokollserver (32) zum Ordnen der Benutzeraktion und der Benutzerschnittstellenreaktion.

13. System nach den Ansprüchen 11 oder 12, wobei der Server in der DMZ angeordnet ist.

14. System nach den Ansprüchen 12 oder 13, wobei der Protokollserver in der DMZ angeordnet ist.

15. System nach Anspruch 11, das ferner aufweist:
(g) ein Speicherverfahren für das Ordnen der mehreren Datenbestandteile zum Speichern auf der Speicherrechenvorrichtung; und
(h) eine von der Speicherrechenvorrichtung betriebene Datenbank zum Empfangen der mehreren Datenbestandteile zum Speichern.

## Revendications

1. Procédé destiné à recueillir des données concernant une session d'utilisateur interactive sur un réseau, comprenant :
la détermination de l'établissement de ladite session d'utilisateur interactive,
la détection et l'acquisition par un dispositif de calcul d'utilisateur par l'intermédiaire de fonctions d'un système d'exploitation natif dudit dispositif de calcul d'utilisateur à la fois d'une action de dispositif d'entrée d'utilisateur d'un utilisateur donné et d'une réaction d'interface d'utilisateur de ladite session d'utilisateur interactive,
la séparation à la fois de l'action de dispositif d'entrée d'utilisateur et de ladite réaction d'interface d'utilisateur en au moins un événement et les données associées, lesdites données associées formant des paramètres pour ledit au moins un événement, et
l'envoi dudit au moins un événement et les données associées au travers d'un pare-feu d'une zone DMZ (zone démilitarisée) comprenant un pare-feu intérieur et ledit pare-feu extérieur, pour une mémorisation en association au niveau d'un serveur intermédiaire accessible par l'utilisateur à l'intérieur de ladite zone DMZ, de sorte que lesdites données soient récupérables à partir de l'intérieur dudit pare-feu intérieur par un dispositif de calcul de mémorisation, ladite association comprenant une organisation dudit au moins un événement et les données associées de manière à permettre une reconstitution à distance de ladite session d'utilisateur interactive, ladite reconstitution comprenant à la fois ladite action de dispositif d'entrée utilisateur et ladite réaction d'interface d'utilisateur, ladite reconstitution étant effectuée à partir dudit au moins événement et des données associées.

2. Procédé selon la revendication 1, dans lequel ladite étape supplémentaire consistant à restituer au moins une partie de la session d'utilisateur interactive par simulation à partir dudit au moins un événement et les données associées.

3. Procédé selon la revendication 1 ou 2, dans lequel ledit dispositif d'entrée d'utilisateur est sélectionné à partir du groupe constitué d'un dispositif de pointage, d'un clavier, et d'une entrée de stylet.

4. Procédé selon l'une quelconque des revendications 1 à 3, dans lequel ladite réaction d'interface d'utilisateur est exécutée par l'intermédiaire d'une interface GUI (interface graphique d'utilisateur).

5. Procédé selon la revendication 4, dans lequel ladite interface GUI comporte une fenêtre, et ladite réaction d'interface d'utilisateur comprend une activité à fenêtre.

6. Procédé selon la revendication 5, dans lequel ladite interface GUI est fournie par l'intermédiaire d'un navigateur de réseau Web, et ladite réaction d'interface d'utilisateur comprend l'affichage d'une page de réseau Web.

7. Procédé selon la revendication 6, dans lequel les données pour ladite page de réseau Web sont séparées en au moins un code de langage de balisage afin de reconstituer ladite page Web.

8. Procédé selon l'une quelconque des revendications 1 à 7, dans lequel ledit au moins un événement et les données associées sont filtrés.

9. Procédé selon l'une quelconque des revendications 2 à 8, dans lequel ladite restitution est exécutée selon un horodateur de chaque événement.

10. Procédé selon l'une quelconque des revendications 1 à 9, dans lequel ladite au moins une action de dispositif d'entrée d'utilisateur et ladite réaction d'interface d'utilisateur font partie d'une interaction entre ledit utilisateur et un agent humain, en permettant ainsi une estimation à distance de l'assurance de la qualité et/ou de la maîtrise de la qualité en relation avec ladite interaction.

11. Système destiné à recueillir des données concernant une session d'utilisateur interactive sur un réseau, comprenant :
(a) un dispositif de calcul d'utilisateur (14), et
(b) un client (16) mis en oeuvre par ledit dispositif de calcul d'utilisateur, configuré pour déterminer l'établissement de ladite session d'utilisateur interactive et pour détecter et acquérir à la fois une action de dispositif d'entrée d'utilisateur et une réaction d'interface d'utilisateur,
(c) un serveur situé à distance (32) destiné à exécuter la session d'utilisateur interactive avec ledit dispositif de calcul d'utilisateur, et
(d) un dispositif de calcul de mémorisation (20) associé audit serveur situé à distance, destiné à séparer à la fois ladite action de dispositif d'entrée d'utilisateur et ladite réaction d'interface d'utilisateur en au moins un événement et les données associées en association, lesdites données associées étant des données de paramètre d'au moins un événement, ladite association comprenant une organisation dudit événement et desdites données associées de sorte qu'à la fois l'action de dispositif d'entrée d'utilisateur et ladite réaction d'interface d'utilisateur puissent être reconstituées à distance à partir d'au moins un événement et des données associées et
**caractérisé en ce que** ledit client est configuré pour exécuter ladite détection et ladite acquisition par l'intermédiaire des fonctions de système d'exploitation natif du dispositif de calcul de l'utilisateur, et **caractérisé en outre par** :
(e) une zone DMZ (zone démilitarisée) (28) située entre un pare-feu intérieur et un pare-feu extérieur, qui sépare ledit dispositif de calcul de mémorisation dudit dispositif de calcul d'utilisateur, et
(f) un serveur intermédiaire placé dans ladite zone DMZ, ledit serveur intermédiaire fonctionnant pour recevoir dudit client ladite action d'utilisateur détectée et une réaction d'interface d'utilisateur et étant configuré pour permettre la récupération de ladite action d'utilisateur détectée et la réaction d'interface d'utilisateur de l'intérieur du pare-feu intérieur par ledit dispositif de calcul de mémorisation.

12. Système selon la revendication 11, comprenant en outre :
(f) un serveur d'établissement de session (32) destiné à organiser ladite action d'utilisateur et ladite réaction d'interface d'utilisateur.

13. Système selon la revendication 11 ou 12, dans lequel ledit serveur est situé dans ladite zone DMZ.

14. Système selon la revendication 12 ou 13, dans lequel ledit serveur d'établissement de session est situé dans ladite zone DMZ.

15. Système selon la revendication 11, comprenant en outre :
(g) un traitement de mémorisation destiné à organiser ladite pluralité de composantes de données en vue d'une mémorisation sur ledit dispositif de calcul de mémorisation, et
(h) une base de données mise en oeuvre par ledit dispositif de calcul de mémorisation destinée à recevoir ladite pluralité de composantes de données en vue d'une mémorisation.
